# EUROPÄISCHE PATENTSCHRIFT

(11) **EP 1 538 349 B1**
(45) Veröffentlichungstag und Bekanntmachung des Hinweises auf die Patenterteilung: **16.08.2006**
(21) Anmeldenummer: 03027699.2
(22) Anmeldetag: 04.12.2003
(51) Int. Cl.: F16B 37/04

(54) **Befestigungselement**
Fastening device
Dispositif de fixation

(43) Veröffentlichungstag der Anmeldung: 08.06.2005
(73) Patentinhaber: SW Stanzwerk Glarus AG, 8750 Glarus (CH)
(72) Erfinder: Müller, Franz, 65205 Wiesbaden (DE); Henrich, Peter, 65830 Kriftel (DE); Hagemann, Ludbert, 91608 Gesslau (DE)
(74) Vertreter: Erb, Henning

(56) Entgegenhaltungen:
- EP-A- 0 076 765
- GB-A- 2 029 918
- US-A- 4 575 295
- US-A- 4 917 553

## Beschreibung

Die Erfindung befaßt sich mit einem Schnellbefestigungselement zur Verankerung von Lasten an einer Profilschiene mit einem Längsschlitz und einem im wesentlichen C-förmigen Profilquerschnitt mit einem außerhalb der Schiene liegenden Montageteil, einem mit dem Montageteil verbundenen Käfig, der in den Schlitz der Profilschiene ragt und eine axiale Führung gegen ein relatives Verdrehen zum Montageteil für eine Schließmutter bildet, die eine längliche Form besitzt und mit dem Montageteil verdrehbar ist, so daß sie unter die einander zugewandten Schenkelenden der Profilschiene greift, und elastischen Mitteln, die die Schließplatte in der montierten Stellung gegen die Unterseite der nach innen abgewinkelten Schenkelenden der Profilschiene drücken und das Montageteil von oben gegen die nach innen abgewinkelten Schenkelenden der Profilschiene ziehen.

Ein solches Schnellbefestigungselement ist aus der EP 0 076 765 B1 bekannt. Bei der dort gezeigten Lösung drückt eine vorgespannte Schraubenfeder die Schließmutter von unten gegen das Montageteil, wobei die als einfaches Blechteil ausgebildete Schließmutter an ihren in Eindrehrichtung vorne liegenden Flanken abgewinkelt ist, so daß sie unter die Schenkelenden der Profilschiene gedreht werden kann.

Problematisch ist, daß bei dickeren Blechstärken der Profilschiene oder bei Profilschienen, bei welchen die nach innen weisenden Schenkelenden zusätzlich in Richtung des Schienenbodens abgewinkelt sind, das Eindrehen des Schnellbefestigungselements in die vormontierte Klemmstellung erschwert oder unmöglich sein kann, wobei insbesondere die Verwendung ein und desselben Schnellbefestigungselements bei unterschiedlichen Profilschienen erschwert ist.

Die Aufgabe der vorliegenden Erfindung besteht darin, ein Schnellbefestigungselement zu schaffen, das sich leichter an die jeweils zum Einsatz kommende Profilschiene anpassen läßt.

Erfindungsgemäß wird die Aufgabe durch ein Schnellbefestigungselement der eingangs beschriebenen Art gelöst, bei welchem ein erstes Federelement zwischen der Schließmutter und dem Montageteil und ein zweites Federelement zwischen dem in die Schiene ragenden Ende des Käfigs und der Schließmutter vorgesehen ist, wobei die beiden Federelemente die Schließmutter in der Ausgangsstellung in einer Gleichgewichtslage halten.

Durch die Anordnung der beiden Federelemente ist es möglich, den Abstand zwischen der Schließmutter und dem Montageteil durch die Auswahl der Federelemente zu beeinflussen, so daß die Schließmutter ohne weiteres in der gewünschten Position angeordnet werden und das Eindrehen des Schnellbefestigungselements und damit das vorläufige Festlegen an der Profilschiene in jedem Fall sicher durchgeführt werden kann.

Es ist denkbar, entweder getrennte Federelemente oberhalb und unterhalb der Schließmutter vorzusehen, oder die beiden Federelemente einstückig auszubilden und die Schließmutter mittig an diesem einen Federelement anzuordnen. Durch die Lage der Schließmutter an dem Federelement, beispielsweise einer Schraubenfeder, wird der Abstand zu dem Montageteil eingestellt.

In einer weiteren bevorzugten Ausführungsform der Erfindung ist vorgesehen, daß die Schließmutter im Bereich ihrer Enden an der Oberseite zwei Nuten aufweist, in welche im montierten Zustand in Richtung der in die Profilschiene eingesteckten Schließmutter weisende Schenkelenden der Profilschiene eingreifen. Bei einer solchen Lösung schnappen beim Eindrehen des Schnellbefestigungselements die Schenkelenden in die Nut und sorgen so für einen guten Halt des Schnellbefestigungselements in dieser vorläufig festgelegten Stellung.

Mit einer derartigen Ausbildung der Schließmutter, die vorzugsweise als Schmiedeteil ausgebildet ist, ist es auch denkbar, ein und dasselbe Schnellbefestigungselement einerseits in Profilschienen mit nach unten abgewinkelten Enden der nach innen weisenden Schenkel als auch in einfache, C-förmige Profilschienen ohne diese abgewinkelten Enden einzustecken. In letzerem Fall liegt die Oberseite der Schließmutter im eingedrehten Zustand an der Unterseite der Schenkelenden an, während im anderen Fall die Schließmutter über den Nutgrund an den nach unten weisenden Schenkelenden abgestützt ist.

In einer weiter bevorzugten Ausführungsform der Erfindung ist vorgesehen, daß wenigstens die außenseitigen Nutränder an ihren in der Eindrehrichtung vorderen Enden abgeschrägt oder abgerundet sind. Solche abgerundeten oder abgeschrägten Enden erleichtern das Eindrehen des Schnellbefestigungselements in seine vorläufig verklemmte Stellung insbesondere dann, wenn keine zusätzliche Beeinflussung der Lage der Mutter vorgesehen ist, beispielsweise durch ein bewegliches Teil am Montageteil oder einen bereits in die Schließmutter eingedrehten Bolzen.

Zweckmäßig kann es auch sein, zusätzlich die hinteren Enden abzuschrägen oder abzurunden, um auch einen Ausbau des Schnellbefestigungselements zu ermöglichen, beispielsweise wenn dieses an einer falschen Stelle eingesetzt worden ist. Um einen gewissen Schutz gegen allzu leichtes Entfernen zu bieten, kann es sinnvoll sein, die hinteren Enden steiler geneigt auszubilden als die vorderen Enden.

Eine bereits vorstehend angedeutete Möglichkeit, die Lage der Schließmutter zum Erleichtern des Eindrehens zu beeinflussen, kann dadurch realisiert werden, daß beispielsweise der Montageteil aus einer starr mit dem Käfig verbundenen Anlageplatte und einer Montageplatte besteht, an welcher die erste Feder abgestützt ist und die gegen die Rückstellkraft dieser Feder in Richtung der Anlageplatte beweglich ist, wobei sich die Schließmutter von der Anlageplatte entfernt. Beim Verschrauben einer Last wird abschließend die angehobene Montageplatte wiederum gegen die Anlageplatte gepreßt, wobei die Schließmutter an den Schenkelenden anliegend ihre Stellung relativ zu der Anlageplatte beibehält. Zweckmäßig ist es, den Abstand der Montageplatte von der Anlageplatte durch Anschläge zu begrenzen, die gleichzeitig auch Führungen für die Montageplatte bilden können, so daß diese zwischen ihrer ausgefederten und niedergedrückten Stellung kontrolliert geführt ist.

Eine weitere Maßnahme im Hinblick auf eine universelle Einsetzbarkeit des Schnellbefestigungselements in verschiedenen Profilschienen kann darin bestehen, daß die Länge und Geometrie der Schließmutter so gewählt ist, daß sie durch Anlage ihrer Außenflächen an den inneren Schenkelwandungen gegen ein Verdrehen gesichert ist und/oder in einem Schaftbereich der Schließmutter zwei parallele Außenflanken vorgesehen sind, die so beabstandet sind, daß sie durch Anlage an den Schlitzflanken der Profilschiene eine Überdrehsicherung bilden. Wenn sowohl die Außenflanken im Schaftbereich vorgesehen sind als auch die Geometrie der Schließmutter entsprechend gewählt ist, ist eine Überdrehsicherung sowohl an den Innenflanken der Schenkel als auch an den Flanken des Schlitzes möglich, so daß eine Überdrehsicherung auch beim Einsatz in unterschiedlichen Profilschienen gegeben ist.

Nachfolgend wird anhand der beigefügten Zeichnungen näher auf ein Ausführungsbeispiel der Erfindung eingegangen. Es zeigen:
- Fig. 1: eine Draufsicht auf ein Schnellbefestigungselement;
- Fig. 2: eine Ansicht des Schnellbefestigungselements von unten;
- Fig. 3: eine Seitenansicht des Schnellbefestigungselements und
- Fig. 4: eine um 90° gedrehte Seitenansicht des Schnellbefestigungselements.

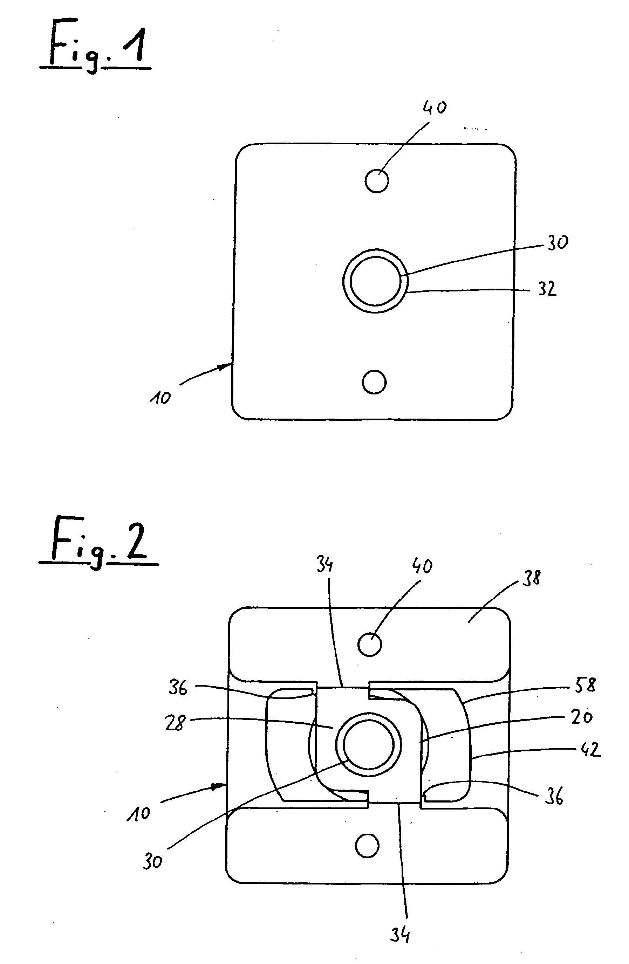

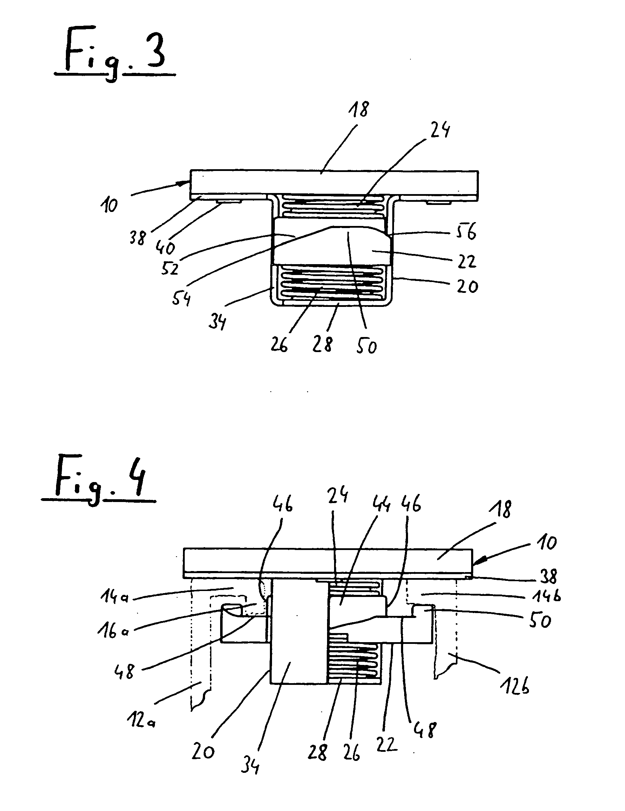

Das in Fig. 1 bis 4 gezeigte Schnellbefestigungselement 10 dient der Verankerung von Lasten (nicht gezeigt) an Profilschienen 12a, 12b (siehe Fig. 4) mit im wesentlichen C-förmigem Querschnitt. Solche Profilschienen können entsprechend der Darstellung auf der rechten Seite in Fig. 4 nach innen umgebogene Schenkelenden 14b besitzen oder - entsprechend der Darstellung auf der linken Seite in Fig. 4 - nach innen umgebogene Schenkelenden 14a mit wiederum in Richtung des Profilschienenbodens zusätzlich gebogenen Schenkelenden 16a aufweisen.

Das Schnellbefestigungselement 10 besteht im wesentlichen aus einem Montageteil 18, das hier aus einer im wesentlichen quadratischen Platte besteht, einem an dem Montageteil 18 festgelegten Käfig 20 und einer in dem Käfig axial unverdrehbar geführten Schließmutter 22 sowie einem ersten Federelement 24, das zwischen dem Montageteil 18 und der Schließmutter 22 angeordnet ist, und einem zweiten Federelement 26, das zwischen der Schließmutter 22 und einem Bodenbereich 28 des Käfigs 20 vorgesehen ist. Die beiden Federelemente 24, 26 halten die Schließmutter 22 in der in Fig. 3 gezeigten Ausgangsstellung in einer Gleichgewichtslage. Die Schließmutter 22 ist mit einem Innengewinde 30 versehen, in welches durch eine kreisförmige Öffnung 32 in dem Montageteil 18 eine Schraube, ein Gewindebolzen oder dergleichen zur Anbringung der Last und Fixieren des Schnellbefestigungselements 10 an der Profilschiene 12a, 12b eingeschraubt werden kann.

Neben dem bereits angesprochenen Bodenbereich 28 zum Abstützen des zweiten Federelements 26 besitzt der Käfig seitliche Schenkel 34, die in seitlichen Ausnehmungen 36 (siehe Fig. 2) der Schließmutter eingreifen, so daß diese lediglich in axialer Richtung zu dem Montageteil 18 beweglich gehalten ist. Ferner verfügt der Käfig 20 über Haltelaschen 38, die mit Hilfe von Nieten 40 an dem Montageteil 18 angebracht sind.

Die Schließmutter 22, die als Schmiedeteil, Stanzteil, Gußteil oder - für geringer beanspruchte Lastfälle - als Kunststoffteil gefertigt sein kann, besitzt eine längliche Form, wobei die Breite so gewählt ist, daß die Schließmutter in den mittigen Schlitz einer Profilschiene eingesteckt werden kann, während ihre Länge so bemessen ist, daß sie nach einem Verdrehen des Schnellbefestigungselements um 90° sicher unter die nach innen weisenden Schenkelenden 14a, 14b der jeweiligen Profilschiene 12a, 12b greift.

Die Außenflächen 42 an den Schmalseiten der Schließmutter 22 liegen in einem Abstand zueinander, der bei der Verwendung der in Fig. 4 gezeigten Profilschiene 12b geringfügig kleiner als die Innenweite der Profilschiene 12b gewählt ist, so daß diese Außenflächen 42 einen Schutz gegen das Überdrehen des Schnellbefestigungselements 10 bieten. Ein Schutz vor Überdrehen kann auch dadurch erreicht werden, daß in einem Schaftbereich 44 vorgesehene Flanken 46 in einem Abstand ungefähr entsprechend der Schlitzbreite einer Profilschiene 12a vorgesehen sind, so daß die Überdrehsicherung entsprechend nicht zwischen den Schenkelinnenwänden und den Außenflächen 42, sondern den Schlitzflanken und den Flanken 46 erreicht wird.

Um auch bei der auf der linken Seite in Fig. 4 gezeigten Profilschienenform mit nach unten zum Profilschienenboden umgebogenen Schenkelenden 16a einen sicheren Sitz der Schließmutter 22 zu erreichen, verfügt diese auf ihrer dem Montageteil 18 zugewandten Oberseite über zwei parallel zu den Schmalseiten verlaufende Nuten 48, die entsprechend der Geometrie der Profilschiene 12a ausgebildet sind. Bei der Verwendung einer Profilschiene 12b ohne diese zusätzliche Abwinkelung liegt die Schließmutter 22 mit den Oberseiten der äußeren Nutwandungen 50 an der Unterseite der nach innen umgebogenen Schenkelenden 14b an.

Um das Eindrehen des Schnellbefestigungselements 10 in die Profilschiene 12a, 12b insbesondere dann zu erleichtern, wenn die Nutbereiche 48 unter die Profilschienen 16a einschnappen müssen, sind die Nutwandungen auf der in Eindrehrichtung vorne liegenden Seite mit einer Schräge 52 versehen, deren Anfangspunkt 54 im in die Profilschiene eingesetzten Zustand unterhalb des zum Schienenboden umgebogenen Schenkelendes 16a liegt, so daß die Schräge 52 dort angreifen kann und bei einem Verdrehen des Schnellbefestigungselements 10 die Mutter 22 entsprechend von dem Montageteil 18 weg bewegt, bis die Schenkelenden 16a unter der Federwirkung in die Nutbereiche 48 einschnappen kann. Am gegenüberliegenden Ende sind die Nutwandungen 50 mit einer Abrundung 56 versehen, die das Entfernen des Schnellbefestigungselements 10 erleichtert, wenn dieses versehentlich an einer falschen Stelle der Profilschiene eingesetzt worden ist.

Abgerundete Flankenbereiche 58 an den Außenflanken 42 verhindern ein Verklemmen der Schließmutter 22 vor dem Erreichen der vormontierten Klemmstellung.

Das in den Abbildungen gezeigte Schnellbefestigungselement 10 kann auf verschiedene Art und Weise variiert werden. So ist es beispielsweise denkbar, den Montageteil 18 zweiteilig auszubilden mit einem unteren, starr mit dem Käfig 20 verbundenen Anlageteil und einem beweglich geführten Montageteil, an welchem die erste Feder 24 abgestützt ist. Bei dieser Maßnahme kann durch Niederdrücken der Montageplatte auch die Lage der Schließmutter 22 beeinflußt werden, so daß diese leichter unter die Schenkelenden greifen kann und mit geringerem Widerstand in ihre Klemmstellung gedreht werden kann.

Anstelle von zwei getrennt ausgebildeten Federn 24, 26 ist auch ein einteiliges Federelement zwischen dem Montageteil 18 und dem Bodenbereich 28 des Käfigs 20 vorstellbar, wobei die Schließmutter 22 dann mittig an einer gewünschten Stelle an den Gewindegängen dieses Federelements verankert sein kann.

## Patentansprüche

1. Schnellbefestigungselement zur Verankerung von Lasten an einer Profilschiene (12a, 12b) mit einem Längsschlitz und einem im wesentlichen C-förmigen Profilquerschnitt, mit einem außerhalb der Schiene (12a, 12b) liegenden Montageteil (18), einem mit dem Montageteil (18) verbundenen Käfig (20), der in den Schlitz der Profilschiene (12a, 12b) ragt und eine axiale Führung (34) gegen ein relatives Verdrehen zum Montageteil (18) für eine Schließmutter (22) bildet, die eine längliche Form besitzt und mit dem Montageteil (18) verdrehbar ist, so daß sie unter die einander zugewandten Schenkelenden (14a, 16a; 14b) greift, und elastischen Mitteln (24, 26), die die Schließmutter (22) in der montierten Stellung gegen die Unterseite der nach innen abgewinkelten Schenkelenden (14a, 16a; 14b) der Profilschiene (12a; 12b) drücken und den Montageteil (18) von oben gegen die nach innen abgewinkelten Schenkelenden (14a; 14b) der Profilschiene (12a; 12b) ziehen, **dadurch gekennzeichnet, daß** ein erstes Federelement (24) zwischen der Schließmutter (22) und dem Montageteil (18) und ein zweites Federelement (26) zwischen dem in den Schlitz ragenden Ende (28) des Käfigs (20) und der Schließmutter (22) vorgesehen ist, wobei die beiden Federelemente (24, 26) die Schließmutter (22) in der Ausgangsstellung in einer Gleichgewichtslage halten.

2. Schnellbefestigungselement nach Anspruch 1, **dadurch gekennzeichnet, daß** das erste und zweite Federelement einstückig ausgebildet sind und die Schließmutter mittig an diesem Federelement angeordnet ist.

3. Schnellbefestigungselement nach Anspruch 2, **dadurch gekennzeichnet, daß** das Federelement bzw. die Federelemente (24, 26) Schraubenfedern sind.

4. Schnellbefestigungselement nach einem der vorhergehenden Ansprüche, **dadurch gekennzeichnet, daß** die Schließmutter (22) im Bereich ihrer Enden an der Oberseite zwei Nuten (48) aufweist, in welche in Richtung der in die Profilschiene eingesetzten Schließmutter (22) weisende Schenkelenden (16a) der Profilschiene (12a) einrückbar sind.

5. Schneilbefestigungseiement nach Anspruch 4, **dadurch gekennzeichnet, daß** wenigstens die außenseitigen Nutwandungen (50) an ihren in der Eindrehrichtung vorderen Enden (54, 52) abgeschrägt oder abgerundet sind.

6. Schnellbefestigungselement nach Anspruch 5, **dadurch gekennzeichnet, daß** die hinteren Enden (56) ebenfalls abgeschrägt oder abgerundet sind.

7. Schnellbefestigungselement nach Anspruch 6, **dadurch gekennzeichnet, daß** die hinteren Enden (56) steiler geneigt sind als die vorderen Enden (52).

8. Schnellbefestigungselement nach einem der vorhergehenden Ansprüche, **dadurch gekennzeichnet, daß** die Länge und Geometrie der Schließmutter (22) so gewählt ist, daß sie durch Anlage ihrer Außenflächen (42) an den inneren Schenkelwandungen der Profilschiene (12b) gegen ein Überdrehen gesichert ist.

9. Schnellbefestigungselement nach einem der vorhergehenden Ansprüche, **dadurch gekennzeichnet, daß** im Schaftbereich (44) der Schließmutter (22) zwei parallele Außenflanken (46) vorgesehen sind, die so beabstandet sind, daß sie durch Anlage an den Schlitzflanken der Profilschiene (12a) eine Überdrehsicherung bilden.

10. Schnellbefestigungselement nach einem der vorhergehenden Ansprüche, **dadurch gekennzeichnet, daß** der Montageteil aus einer mit dem Käfig starr verbundenen Anlageplatte und einer Montageplatte besteht, an welcher die erste Feder abgestützt ist und die gegen die Rückstellkraft dieser Feder in Richtung der Anlageplatte beweglich ist, wobei sich die Schließmutter von der Anlageplatte entfernt.

11. Schnellbefestigungselement nach Anspruch 10, **dadurch gekennzeichnet, daß** der Abstand der Montageplatte von der Anlageplatte durch Anschläge begrenzt ist.

12. Schnellbefestigungselement nach Anspruch 11, **dadurch gekennzeichnet, daß** die Anschläge Halter aufweisen, die Führungen für die Montageplatte bilden.

## Claims

1. A quick-fastening element for anchoring loads to a profile rail (12a,12b) with a longitudinal slot and with a substantially C-shaped profile cross-section, with a mounting member (18) situated outside the rail (12a,12b), with a cage (20) which is connected to the mounting member (18) and which projects into the slot of the profile rail (12a,12b) and forms an axial guide (34) against relative rotation of the mounting member (18) for a lock nut (22) which is of elongate shape and is rotatable with the mounting member (18) so that it engages under the mutually facing arm ends (14a,16a; 14b), and with elastic means (24,26) which press the lock nut (22) in the mounted position against the underside of the inwardly bent arm ends (14a, 16a; 14b) of the profile rail (12a;12b) and pull the mounting member (18) from the top against the inwardly bent arm ends (14a; 14b) of the profile rail (12a;12b), **characterised in that** a first spring element (24) is provided between the lock nut (22) and the mounting member (18) and a second spring element (26) between the end (28) of the cage (20) projecting into the slot and the lock nut (22), wherein in the starting position the two spring elements (24,26) retain the lock nut (22) in an equilibrium position.

2. A quick-fastening element according to Claim 1, **characterised in that** the first and second spring elements are formed in one piece and the lock nut is arranged centrally on this spring element.

3. A quick-fastening element according to Claim 2, **characterised in that** the spring element or spring elements (24,26) are helical springs.

4. A quick-fastening element according to any one of the preceding Claims, **characterised in that** in the vicinity of its ends on the upper side the lock nut (22) has two grooves (48) into which arm ends (16a) of the profile rail (12a) can engage, which arm ends face towards the lock nut (22) inserted into the profile rail.

5. A quick-fastening element according to Claim 4, **characterised in that** at least the outside groove walls (50) are bevelled or rounded at its front ends (54,52) viewed in the screwing-in direction.

6. A quick-fastening element according to Claim 5, **characterised in that** the rear ends (56) are also bevelled or rounded.

7. A quick-fastening element according to Claim 6, **characterised in that** the rear ends (56) are more steeply inclined than the front ends (52).

8. A quick-fastening element according to any one of the preceding Claims, **characterised in that** the length and geometry of the lock nut (22) are chosen so that by its outer surfaces (42) abutting against the inner arm walls of the profile rail (12b) it is prevented from being overtightened.

9. A quick-fastening element according to any one of the preceding Claims, **characterised in that** in the shank zone (44) of the lock nut (22) two parallel outer flanks (46) are provided which are spaced apart so that by abutting against the slot flanks of the profile rail (12a) they form a means of preventing overtightening.

10. A quick-fastening element according to any one of the preceding Claims, **characterised in that** the mounting member comprises an abutment plate rigidly connected to the cage and a mounting plate, on which the first spring bears and which can move towards the abutment plate against the restoring force of this spring, whereupon the lock nut is moved apart from the abutment plate.

11. A quick-fastening element according to Claim 10, **characterised in that** the distance of the mounting plate from the abutment plate is limited by stops.

12. A quick-fastening element according to Claim 11, **characterised in that** the stops have holders which form guides for the mounting plate.

## Revendications

1. Dispositif de fixation rapide pour ancrer des charges sur un rail profilé (12a, 12b) doté d'une rainure longitudinale et d'une section profilée essentiellement en forme de C, d'une pièce de montage (18) se trouvant en dehors du rail (12a, 12b), d'une cage (20) relié à la pièce de montage (18) entrant dans la rainure du rail profilé (12a, 12b) et formant un guide axial (34) contre une torsion relative par rapport à la pièce de montage (18) pour un écrou de fermeture (22) de forme allongée et déformable avec la pièce de montage (18), de sorte qu'il est en prise sous les extrémités des branches (14a, 16a ; 14b) tournées les unes vers les autres, et doté de moyens élastiques (24, 26) qui appuient l'écrou de fermeture (22) en position montée contre la face inférieure des extrémités de branches (14a, 16a ; 14b) des rails profilés (12a ; 12b) pliées vers l'intérieur et qui tirent la pièce de montage (18) depuis le haut contre les extrémités de branche (14a ; 14b) des rails profilés (12a ; 12b) pliées vers l'intérieur,
**caractérisé en ce qu'**
un premier élément élastique (24) est prévu entre l'écrou de fermeture (22) et la pièce de montage (18) et un deuxième élément élastique (26) entre l'extrémité (28) de la cage (20) faisant saillie dans la rainure et l'écrou de fermeture (22), et les deux éléments élastiques (24, 26) maintiennent l'écrou de fermeture (22) en position initiale dans une position d'équilibre.

2. Dispositif de fixation rapide selon la revendication 1,
**caractérisé en ce que**
le premier et le deuxième élément élastique sont d'une seule pièce, et l'écrou de fermeture est au milieu de ces éléments élastiques.

3. Dispositif de fixation rapide selon la revendication 2,
**caractérisé en ce que**
l'élément élastique et/ou les éléments élastiques (24, 26) sont des ressorts cylindriques.

4. Dispositif de fixation rapide selon l'une quelconque des revendications précédentes,
**caractérisé en ce que**
l'écrou de fermeture (22) présente dans la zone de ses extrémités sur la face supérieure deux rainures (48) dans lesquelles peuvent être ramenées des extrémités de branche (16a) du rail profilé (12a) en direction de l'écrou de fermeture (22) introduit dans le rail profilé.

5. Dispositif de fixation rapide selon la revendication 4,
**caractérisé en ce qu'**
au moins les parois extérieures des rainures (50) sont biseautées ou arrondies au niveau de leurs extrémités avant (54, 52) dans le sens d'introduction.

6. Dispositif de fixation rapide selon la revendication 5,
**caractérisé en ce que**
les extrémités arrière (56) sont également biseautées ou arrondies.

7. Dispositif de fixation rapide selon la revendication 6,
**caractérisé en ce que**
les extrémités arrière (56) sont inclinées avec un angle plus obtus que les extrémités avant (52).

8. Dispositif de fixation rapide selon l'une quelconque des revendications précédentes,
**caractérisé en ce que**
la longueur et la géométrie de l'écrou de fermeture (22) sont choisies de manière à ce qu'il ne puisse pas se sur-tordre grâce à la butée de ses surfaces extérieures (42) contre les parois intérieures des branches du rail profilé (12b).

9. Dispositif de fixation rapide selon l'une quelconque des revendications précédentes,
**caractérisé en ce que**
dans la zone de la tige (44) de l'écrou de fermeture (22), deux flancs extérieurs parallèles (46) sont écartés l'un de l'autre pour former une sécurité anti-surtorsion en s'appuyant sur les flancs de la fente du rail profilé (12a).

10. Dispositif de fixation rapide selon l'une quelconque des revendications précédentes,
**caractérisé en ce que**
la pièce de montage se compose d'une plaque d'installation reliée de manière rigide à la cage et d'une plaque de montage sur laquelle s'appuie le premier ressort et qui est mobile contre la force de rappel de ce ressort en direction de la plaque d'installation, l'écrou de fermeture étant éloigné de la plaque d'installation.

11. Dispositif de fixation rapide selon la revendication 10,
**caractérisé en ce que**
l'écart entre la plaque de montage et la plaque d'installation est délimité par des butées.

12. Dispositif de fixation rapide selon la revendication 11,
**caractérisé en ce que**
les butées présentent des appuis formant des guidages pour la plaque de montage.
